# EUROPEAN PATENT SPECIFICATION

(11) **EP 3 737 498 B1**
(45) Date of publication and mention of the grant of the patent: **29.12.2021**
(21) Application number: 19761724.4
(22) Date of filing: 06.08.2019
(51) Int. Cl.: B01J 23/78, B01J 35/04, B01J 37/02, B01D 53/00

(54) **METHOD OF PREPARATION OF A CATALYST FOR THE REMOVAL OF NITROUS OXIDE FROM WASTE INDUSTRIAL GASES AND THE CATALYST PREPARED BY THIS METHOD**
VERFAHREN ZUR HERSTELLUNG EINES KATALYSATORS ZUR ENTFERNUNG VON STICKSTOFFOXID AUS INDUSTRIEABGASEN UND NACH DIESEM VERFAHREN HERGESTELLTER KATALYSATOR
PROCÉDÉ DE PRÉPARATION D'UN CATALYSEUR POUR L'ÉLIMINATION D'OXYDE NITREUX DE GAZ INDUSTRIELS USÉS ET CATALYSEUR PRÉPARÉ PAR CE PROCÉDÉ

(30) Priority: 07.08.2018 CZ 20180398
(43) Date of publication of application: 18.11.2020
(73) Proprietor: Vysoká Skola Bánská - Technická Univerzita Ostrava, 70800 Ostrava-Poruba (CZ)
(72) Inventor: KLEGOVA, Anna, 70800 Ostrava (CZ); KISKA, Tomás, 70200 Ostrava (CZ); PACULTOVÁ, Katerina, 74283 Zbyslavice (CZ); OBALOVÁ, Lucie, 72529 Ostrava (CZ)
(74) Representative: Sedlák, Jirí
(86) International application number: PCT/CZ2019/050032
(87) International publication number: WO 2020/030204

(56) References cited:
- PASHA N ET AL: "Studies on cesium doped cobalt oxide catalysts for direct N"2O decomposition in the presence of oxygen and steam", CATALYSIS COMMUNICATIONS, ELSEVIER, AMSTERDAM, NL, vol. 10, no. 2, 15 November 2008 (2008-11-15), pages 132-136, XP025572243, ISSN: 1566-7367, DOI: 10.1016/J.CATCOM.2008.06.006 [retrieved on 2008-06-20]
- GUDYKA SYLWIA ET AL: "Enhancing the deN2O activity of the supported Co3O4|[alpha]-Al2O3catalyst by glycerol-assisted shape engineering of the active phase at the nanoscale", APPLIED CATALYSIS B: ENVIRONMENTAL, ELSEVIER, AMSTERDAM, NL, vol. 201, 17 August 2016 (2016-08-17), pages 339-347, XP029750829, ISSN: 0926-3373, DOI: 10.1016/J.APCATB.2016.08.034
- CIURA KLAUDIA ET AL: "Optimization of cesium and potassium promoter loading in alkali-doped Zn0.4Co2.6O4|Al2O3catalysts for N2O abatement", REACTION KINETICS, MECHANISMS AND CATALYSIS, AKADEMIAI KIADO RT, HU, vol. 121, no. 2, 26 April 2017 (2017-04-26), pages 645-655, XP036275406, ISSN: 1878-5190, DOI: 10.1007/S11144-017-1188-9 [retrieved on 2017-04-26]

## Description

### Field of the Invention

The invention concerns the removal of pollutants from gas stream, specifically a catalyst for the removal of nitrous oxide from waste industrial gases and the method of preparation thereof.

### Background of the Invention

Nitrous oxide (N₂O) is regarded as a pollutant contributing to the greenhouse effect and causing damage to the stratospheric ozone (O₃) layer. One molecule of N₂O has the same greenhouse warming potential (GHWP) as 300 molecules of carbon dioxide. In the stratosphere, N₂O undergoes photolysis and reacts with oxygen atoms to give nitric oxide (NO) that enters the cycle of the O₃ destruction.

The greatest industrial sources of N₂O emissions are waste gases from plants that produce nitric acid. The removal of nitrous oxide in plants that produce nitric acid can be realized by decomposition or destruction in the presence of a suitable catalyst or reducing agent. These procedures can be made at both high and low temperatures.

The low-temperature catalytic decomposition of N₂O, i.e. at the temperature of up to 450 °C to give nitrogen and oxygen offers an attractive solution for reducing N₂O emissions in the tail gas. Integration of a catalytic reactor for the catalytic decomposition of N₂O into already existing technologies is feasible. The advantage is that the process does not require a reducing agent and has no effect on the manufacturing process.

The catalytic decomposition of N₂O to give nitrogen and oxygen has been tested on a wide spectrum of catalysts, including rare metals, pure oxides, mixed oxides, perovskites and spinels, as it is disclosed in for example in WO 2011004239 A2, US 20110110835 A9, US 20110110835 A9 or WO 93/15824, and zeolites prepared by ion exchange or impregnation by ions of transition metals as disclosed in WO 1994027709 A1, WO2008151823A2, US 7238641 B2, and US 5171553 A.

The known catalysts for nitrous oxide decomposition include catalysts based on transition metals oxides, such as Co₃O₄, as disclosed in the US 5705136 patent. The structure of Co₃O₄ may incorporate other metals, such as nickel, manganese, zinc, aluminium or magnesium, as disclosed in CZ 300807 B6, US 5407652, CN 201080043868, WO2009142520, WO2012114288, and US9782722.

Modification of cobalt spinels by a small quantity of alkaline metals significantly improves the activity of a catalyst. Alkaline promoters present on the catalyst surface facilitate reduction oxidation processes that take place between the catalyst surface and oxygen-based intermediate reaction products resulting from the decomposition of N₂O. An active phase based on cobalt oxide with alkaline promoters for the N₂O decomposition was disclosed in WO2009142520, where mixed oxides consisting of cobalt oxide, nickel, and zinc oxide were modified by alkaline metals, such as Na and/or K, and alkaline-earth metals, such as Ca and/or Mg. A similar cobalt-based active phase with alkaline promoters was also disclosed in US 9782722, where a catalyst containing the oxides of cobalt, zinc, and aluminium was modified by potassium, caesium, and mixtures thereof. However, in both cases the active phase in powder and pelletized forms was studied. The active phase based on cobalt oxide has a relatively low value of mechanical strength that makes it impossible to form more complex shapes with larger geometrical surface area that are advantageous for practical applications. The low mechanical strength may result in an undesirable destruction of the shaped catalyst and an increased pressure drop. The aforementioned facts make the catalyst unacceptable for industrial applications. Another disadvantage of pelletized catalysts is the fact that part of cobalt oxides inside the pellet cannot be utilized in the reaction due to a high effect of pore diffusion on the catalytic reaction rate. PASHA N. ET AL (CATALYSIS COMMUNICATIONS, ELSEVIER, AMSTERDAM, NL, vol. 10, no. 2, 15 November 2008 (2008-11-15), pages 132-136) discloses a catalyst for the removal of nitrous oxide from waste industrial gases consisting of Co3O4 doped with a Cs promoter in the quantity of ca. 0,01 to 0,3 wt% (related to the weight of Co3O4-Cs). The catalyst is obtained by first preparing Co3O4 and impregnating it with Cs nitrate, drying and calcining.

Application of the active phase onto a suitable support might solve the problem with the low mechanical strength of the catalyst. In addition, the application of a thin active layer onto a support results in the better utilization of the active phase and eliminates the negative effect of pore diffusion. Cobalt oxide-based supported catalysts for the decomposition of N₂O have been studied on monoliths, steel meshes and also on Al₂O₃ tablets.

The task of this invention is the creation of a catalyst for the removal of nitrous oxide from waste industrial gases and a method of its preparation that would remove nitrous oxide efficiently and effectively from gases at lower reaction temperatures, that would show high mechanical strength, high catalytic activity, low content of rare and hazardous cobalt component and the preparation of which would be easy.

### Summary of the Invention

The aforementioned drawbacks are overcome by a catalyst for the removal of nitrous oxide from waste industrial gases at reaction temperatures ranging from 300 to 450 °C and a method of its preparation according to the present invention. The essence of the method of the catalyst preparation according to this invention is based on the preparation of impregnating solution that is stirred and heated up to a temperature ranging from 60 to 80 °C. A structured support in the form of ceramic foam with the pore density of 393 to 1,181 per m (10 to 30 ppi) is to be immersed in the impregnating solution for at least 20 minutes. A layer of a Co₃O₄ precursor with a Cs alkaline promoter builds up on the surface of the structured support. Then the ceramic foam with precursor layer is dried for 4 hours at 105 °C and calcinated in the air for 4 hours at the temperature of 500 °C to obtain final catalyst. The impregnating solution is prepared as aqueous solution of cobalt(II) nitrate at the concentration of 660 to 1,980 g/l, nitrate or cesium(I) nitrate at the concentration of 2.4 to 85.8 g/l and glycerol at the concentration of up to 990 g/l. The catalyst active layer comprises aggregates of cobalto-cobaltic oxide (Co₃O₄) with the mean particle size of 410 nm in the quantity ranging from 5 to 15 weight per cent related to the total weight of the catalyst with Cs alkaline promoter in the quantity of 0.3 to 4 weight per cent related to the weight of the active layer (Co₃O₄-Cs).

The subject of the invention also includes a catalyst for the removal of nitrous oxide from waste industrial gases at the reaction temperatures of up to 300 to 450 °C prepared by the aforementioned method. A unique combination of the mixed oxide Co₃O₄ and a structured support in the form of foam providing an active catalyst in combination with an alkali metal (Cs), in particular in the presence of O₂ and H₂O, with a considerably lower content of active component compared to the known types of catalysts used for this reaction.

The quantity of the active layer on the surface of the support, i.e. ceramic foam, is a key parameter of the catalyst. In this case this quantity is controlled by the concentration of the active components in the impregnating solution or by the number of repeated depositions of active layer.

In the case of this invention it has been discovered that due to the high catalytic activity only one deposition, by which the quantity of 5 to 6 weight per cent of Co₃O₄ is applied in the foam, is sufficient. This quantity corresponds to the concentration of cobalt(II) nitrate in the impregnating solution of 670 g/l, which ensures an easy preparation and a low content of rare and hazardous components in the catalyst.

The presence of glycerol in the impregnating solution has a positive impact on the catalyst activity, the optimal molar ratio of cobalt to glycerol in the impregnating solution is 1 : 1.

Another key parameter of the activity of Co₃O₄ with caesium for the decomposition of nitrous oxide is the molar ratio of Co to Cs. After the application of active layer onto the support, i.e. ceramic foam, the optimal ratio of Co to Cs, which guarantees a high activity of the catalyst, changes. In this invention, Co₃O₄ applied onto ceramic foam contains Cs in the quantity of 0.3 to 4 weight per cent, in an ideal case 3 weight per cent, which corresponds to the molar ratio of Co to Cs = 55 : 1.

The method of preparation of the catalyst for the removal of nitrous oxide from waste industrial gases according to this invention represents an easy, undemanding preparation of the catalyst with a low content of hazardous and rare cobalt and caesium components and guaranteeing a high catalytic activity for the removal of undesirable N₂O in waste gases resulting from the production of nitric acid by its direct catalytic decomposition.

This makes it possible to realize savings since the catalyst contains less amount of active components compared to bulk pellets, savings of energy, improvement of the environment and fulfilment of the international treaties on reduction of greenhouse gases emissions. The proposed solution will contribute to the improvement of the environment as compound undesirable from the point of view of environmental protection that contribute to the greenhouse effect and damage to the ozone layer is removed from the atmosphere.

### An Example of the Invention Embodiment

### Example 1

### Preparation of Co₃O₄ with 3 weight per cent of Cs on the Al₂O₃-SiO₂ ceramic foam with the content of active layer being 6 weight per cent of Co₃O₄

The aqueous solution of cobalt(II) nitrate (Co^{II+}) at the concentration of 670 g/l and caesium nitrate (Cs^{I+}) at the concentration of 19 g/l is stirred vigorously and heated up to 60 to 80 °C. The ceramic foam is submerged into the impregnating solution for a period of 20 minutes. Then the foam is dried for 4 hours at 105 °C and calcinated in the air for 4 hours at the temperature of 500 °C. The catalyst prepared in this manner included 6 weight per cent of active layer, which corresponds to 0.024 g of Co₃O₄-Cs in 1 ml of the foam and 3 weight per cent of Cs in the increment of Co₃O₄-Cs.

### Catalytic decomposition of N₂O on the Co₃O₄ catalyst with 3 weight per cent of Cs on the Al₂O₃-SiO₂ ceramic foam with the content of active layer being 6 weight per cent of Co₃O₄

The catalyst prepared according to the disclosed procedure was put into a tube reactor made of stainless steel with the inner diameter of 5 cm and put in contact with waste gas containing 1,000 ppm, i.e. 0.1 mole per cent of N₂O, and also O₂, H₂O and NOₓ at various concentrations and the residue of the gaseous mixture consisted of N₂. The catalyst bed included ceramic foam with the volume of 40 ml (diameter of 48 mm, height of 22 mm), the total flow rate of gas was 1,000 ml (at 20 °C, 101 kPa).

Conversion of N₂O at various conditions of measurement

| Reaction temperature, °C | Reaction gas composition | | |
|---|---|---|---|
| | 0.1 mole per cent of N₂O in N₂ | 0.1 mole per cent of N₂O + 5 mole per cent of O₂ + 2 mole per cent of H₂O in N₂ | 0.1 mole per cent of N₂O + 5 mole per cent of O₂ + 2 mole per cent of H₂O + 0.02 mole per cent of NO in N₂ |
| 450 | 100 | 98 | 91 |
| 420 | 100 | 95 | 56 |
| 390 | 99 | 90 | 11 |
| 360 | 97 | 79 | 1 |
| 330 | 88 | 55 | 0 |
| 300 | 66 | 21 | 0 |

### Example 2

### Preparation of Co₃O₄ with 3 weight per cent of Cs on the Al₂O₃-SiO₂ ceramic foam with the content of active layer being 6 weight per cent of Co₃O₄ and adding of glycerol to the impregnating solution

The aqueous solution of cobalt(II) nitrate (Co^{II+}) at the concentration of 670 g/l and caesium nitrate (Cs^{I+}) at the concentration of 19 g/l and glycerol at the concentration of 335 g/l is stirred vigorously and heated up to 60 to 80 °C. The ceramic foam is submerged into the impregnating solution for a period of 20 minutes. Then the foam is dried for 4 hours at 105 °C and calcinated in the air for 4 hours at the temperature of 500 °C. The catalyst prepared in this manner included 6 weight per cent of the active layer, which corresponds to 0.024 g of Co₃O₄-Cs in 1 ml of the foam and 3 weight per cent of Cs in the increment of Co₃O₄-Cs.

### Catalytic decomposition of N₂O on Co₃O₄ with 3 weight per cent of Cs on the Al₂O₃-SiO₂ ceramic foam with the content of active layer being 6 weight per cent of Co₃O₄

The catalyst prepared according to the disclosed procedure was put into a tube reactor made of stainless steel with the inner diameter of 5 cm and put in contact with waste gas containing 1,000 ppm, i.e. 0.1 mole per cent of N₂O, and also O₂, H₂O and NOₓ at various concentrations and the residue of the gaseous mixture consisted of N₂. The catalyst bed included ceramic foam with the volume of 40 ml (diameter of 48 mm, height of 22 mm), the total flow rate of gas was 1,000 ml (at 20 °C, 101 kPa).

Conversion of N₂O at various conditions of measurement

| Reaction temperature, °C | Reaction gas composition | | |
|---|---|---|---|
| | 0.1 mole per cent of N₂O in N₂ | 0.1 mole per cent of N₂O + 5 mole per cent of O₂ + 2 mole per cent of H₂O in N₂ | 0.1 mole per cent of N₂O + 5 mole per cent of O₂ + 2 mole per cent of H₂O + 0.02 mole per cent of NO in N₂ |
| 450 | 100 | 98 | 94 |
| 420 | 100 | 97 | 76 |
| 390 | 100 | 95 | 26 |
| 360 | 98 | 92 | 3 |
| 330 | 95 | 83 | 0.6 |
| 300 | 86 | 57 | 0 |

### Industrial Applicability

The catalyst for the removal of nitrous oxide from waste industrial gases according to this invention can be used for the N₂O decomposition from waste gases resulting from the production of nitric acid, oxalic acid, glyoxal, and others.

## Claims

1. A method of preparation of a catalyst for the removal of nitrous oxide from waste industrial gases at the reaction temperatures of 300 up to 450 °C, **characterized in that** an impregnating solution consisting of aqueous solution of cobalt(II) nitrate at the concentration of 660 up to 1,980 g/l, caesium nitrate at the concentration of 2.4 up to 85.8 g/l and glycerol at the concentration of up to 990 g/l is prepared, stirred and heated up to the temperature of 60 up to 80 °C, ceramic foam is submerged into the impregnating solution for a period of at least 20 minutes, then dried for a period of 4 h and at the temperature of 105 °C and calcinated for a period of 4 h in the air at the temperature of 500 °C, and an active layer of catalyst consisting of Co₃O₄ is formed on the surface of the ceramic foam in the quantity of 5 to 15 weight per cent related to the total weight of the catalyst with a Cs alkaline promoter in the quantity of 0.3 to 4 weight per cent related to the weight of the active layer (Co₃O₄-Cs).

2. The method according to claim 1, **characterized in that** the molar ratio of cobalt and glycerol is adjusted at 1 : 1 during the preparation of the impregnating solution.

3. The method according to claim 2, **characterized in that** the molar ratio of cobalt and caesium is adjusted at 55 : 1 during the preparation of the impregnating solution.

4. The catalyst for the removal of nitrous oxide from waste industrial gases at the reaction temperatures of 300 up to 450 °C prepared by the method according to claims 1 through 3, **characterized in that** it consists of ceramic foam as support, of which surface is deposited an active layer consisting of Co₃O₄ in the quantity of 5 to 15 weight per cent (related to the total weight of the catalyst) with a Cs alkaline promoter in the quantity of 0.3 to 4 weight per cent (related to the weight of the active layer Co₃O₄-Cs).

## Patentansprüche

1. Verfahren zur Herstellung eines Katalysators zur Entfernung von Distickstoffoxid aus Industrieabgasen bei Reaktionstemperaturen von 300 bis 450 °C, **dadurch gekennzeichnet, dass** eine Imprägnierlösung, bestehend aus einer wäßrigen Lösung von Kobalt(II)-nitrat in einer Konzentration von 660 bis 1.980 g/l, Cäsiumnitrat in einer Konzentration von 2,4 bis 85.8 g/l und Glycerin in einer Konzentration von bis zu 990 g/l hergestellt, gerührt und auf eine Temperatur von 60 bis 80 °C erwärmt, Keramikschaum für mindestens 20 Minuten in die Imprägnierlösung getaucht, anschließend für 4 h bei einer Temperatur von 105 °C getrocknet und für 4 h an der Luft bei einer Temperatur von 500 °C kalziniert, und eine aktive Katalysatorschicht, bestehend aus Co₃O₄, in einer Menge von 5 bis 15 Gew.-%, bezogen auf das Gesamtgewicht des Katalysators, mit einem alkalischen Cs-Promotor in einer Menge von 0,3 bis 4 Gew.-%, bezogen auf das Gewicht der aktiven Schicht (Co₃O₄-Cs), auf der Oberfläche des Keramikschaums gebildet wird .

2. Verfahren nach Anspruch 1, **dadurch gekennzeichnet, dass** das molare Verhältnis von Kobalt und Glycerin bei der Herstellung der Imprägnierlösung auf 1 : 1 eingestellt wird.

3. Verfahren nach Anspruch 2, **dadurch gekennzeichnet, dass** das molare Verhältnis von Kobalt und Cäsium bei der Herstellung der Imprägnierlösung auf 55 : 1 eingestellt wird.

4. Katalysator zur Entfernung von Distickstoffoxid aus Industrieabgasen bei Reaktionstemperaturen von 300 bis 450 °C, hergestellt nach dem Verfahren der Ansprüche 1 bis 3, **dadurch gekennzeichnet, dass** er aus einem keramischen Schaum als Träger besteht, auf dessen Oberfläche eine aktive Schicht aus Co₃O₄ in einer Menge von 5 bis 15 Gew.-% (bezogen auf das Gesamtgewicht des Katalysators) mit einem alkalischen Cs-Promotor in einer Menge von 0,3 bis 4 Gew.-% (bezogen auf das Gewicht der aktiven Schicht Co₃O₄-Cs) aufgebracht ist.

## Revendications

1. Procédé de préparation d'un catalyseur pour l'élimination de l'oxyde nitreux des gaz industriels résiduaires aux températures de réaction de 300 à 450°C, **caractérisé en ce qu'une** solution d'imprégnation consistant en une solution aqueuse de nitrate de cobalt (II) à la concentration de 660 à 1 980 g/l, de nitrate de césium à la concentration de 2,4 à 85.8 g/l et de glycérol à la concentration de jusqu'à 990 g/l est préparée, agitée et chauffée à la température de 60 jusqu'à 80 °C, la mousse céramique est immergée dans la solution d'imprégnation pendant une période d'au moins 20 minutes, puis séchée pendant une période de 4 h et à la température de 105 °C et calcinée pendant une période de 4 h dans l'air à la température de 500 °C, et une couche active de catalyseur constituée de Co₃O₄ est formée sur la surface de la mousse céramique en une quantité de 5 à 15 pour cent en poids par rapport au poids total du catalyseur avec un promoteur alcalin Cs en une quantité de 0.3 à 4 pour cent en poids par rapport au poids de la couche active (Co₃O₄-Cs).

2. Procédé selon la revendication 1, **caractérisé en ce que** le rapport molaire du cobalt et du glycérol est ajusté à 1 : 1 pendant la préparation de la solution d'imprégnation.

3. Procédé selon la revendication 2, **caractérisé en ce que** le rapport molaire du cobalt et du césium est ajusté à 55 : 1 pendant la préparation de la solution d'imprégnation.

4. Catalyseur pour l'élimination de l'oxyde nitreux des gaz industriels résiduaires à des températures de réaction de 300 à 450°C, préparé par le procédé selon les revendications 1 à 3, **caractérisé en ce qu'il** consiste en une mousse céramique comme support, sur la surface de laquelle est déposée une couche active constituée de Co₃O₄ en une quantité de 5 à 15 pour cent en poids (par rapport au poids total du catalyseur) avec un promoteur alcalin Cs en une quantité de 0,3 à 4 pour cent en poids (par rapport au poids de la couche active Co₃O₄-Cs).
